# EUROPEAN PATENT APPLICATION

(11) **EP 4 277 398 A1**
(43) Date of publication of application: **15.11.2023**
(21) Application number: 22736547.5
(22) Date of filing: 05.01.2022
(51) Int. Cl.: H04W 72/04

(54) **MODE INDICATION METHOD, TERMINAL DEVICE, AND NETWORK DEVICE**

(30) Priority: 05.01.2021 CN 202110008177; 31.12.2021 CN 202111667705
(71) Applicant: Datang Mobile Communications Equipment Co., Ltd., Beijing 100085 (CN)
(72) Inventor: ZHU, Min, Beijing 100085 (CN); WANG, Junwei, Beijing 100085 (CN)
(74) Representative: dompatent von Kreisler Selting Werner - Partnerschaft von Patent- und Rechtsanwälten mbB
(86) International application number: PCT/CN2022/070393
(87) International publication number: WO 2022/148385

(57) **Abstract**

A mode indication method, a terminal device and a network device are provided, which relates to the field of communications technology. The mode indication method, performed by a terminal device, includes: receiving first indication information sent by a network device, where the first indication information is used to indicate a channel access mode of the terminal device in a first unlicensed frequency band, where the channel access mode includes: a listen before talk (LBT) mode or a no listen before talk (No-LBT) mode.

## Description

### CROSS REFERENCE OF RELATED APPLICATION

The present application claims a priority of Chinese patent application No. 202110008177.6 filed on January 5, 2021 and Chinese patent application No. 202111667705.5 filed on December 31, 2021, which are incorporated herein by reference in its entirety.

### TECHNICAL FIELD

The present disclosure relates to the field of communications technology, and in particular to a mode indication method, a terminal device and a network device.

### BACKGROUND

In related technical solutions, in a case that the system works in an unlicensed frequency band, the system needs to perform a channel access procedure of listen before talk (Listen Before Talk, LBT) before obtaining a channel, that is, the LBT mode. In the existing standards, a user equipment (User Equipment, UE, also called a terminal) shall read information in a field related to channel access when decoding downlink control information (Downlink Control Information, DCI). At present, in the high-frequency unlicensed frequency band, some regions support a channel access mode in which a channel can be obtained without performing LBT, which is called No Listen Before Talk (No Listen Before Talk, No-LBT) mode. However, in the related technologies, the terminal does not know an access mode of a channel where the terminal is located currently, which will affect subsequent operations.

### SUMMARY

Embodiments of the present disclosure provide a mode indication method, a terminal device, and a network device, so as to solve the problem that subsequent operations are affected because the terminal does not know the channel access mode where the terminal is located currently.

In order to solve the above-mentioned technical problem, an embodiment of the present disclosure provides a mode indication method, performed by a terminal device, which includes: receiving first indication information sent by a network device, the first indication information being used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the receiving first indication information sent by the network device includes: receiving first indication information sent by the network device through a first signaling; where the first signaling includes at least one of the following: scheduling signaling of system information, master information block, system information and paging scheduling signaling.

Optionally, in a case that the first signaling includes the scheduling signaling of the system information, M bit of a reserved bit in the scheduling signaling is used to carry the first indication information, where M is an integer greater than or equal to 1.

Optionally, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Optionally, in a case that the first signaling includes the master information block, 1 bit in a reserved field in the master information block is used to carry the first indication information.

Optionally, in a case that the first signaling includes the system information, N bit in the system information is used to carry the first indication information, where N is an integer greater than or equal to 1.

Optionally, in a case that the channel access mode is No-LBT mode, a field related to a channel access type in the DCI is 0 bit.

Optionally, in a case that the first signaling includes the paging scheduling signaling, K bit of a reserved bit in the paging scheduling signaling is used to carry the first indication information, where K is an integer greater than or equal to 1.

Optionally, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the receiving the first indication information sent by the network device includes: receiving the first indication information sent by the network device through radio resource control (RRC) signaling.

Optionally, the first indication information is carried in a bandwidth part uplink dedicated field and/or a bandwidth part downlink dedicated field in an RRC signaling.

Optionally, in a case that the channel access mode is No-LBT mode, a field related to a channel access type in the DCI is 0 bit.

Optionally, the first unlicensed frequency band is a high-frequency unlicensed frequency band.

Optionally, the channel access mode is specific for an uplink bandwidth part and/or a downlink bandwidth part.

Optionally, after the receiving the first indication information sent by the network device, the method further includes: determining, in a case that a channel access mode indication specific for the cell and a channel access mode indication specific for the terminal device are obtained, the channel access mode where the terminal device is located according to the first indication information corresponding to the channel access mode indication specific for the terminal device.

An embodiment of the present disclosure also provides a mode indication method, performed by a network device, which includes: sending first indication information to a terminal device, the first indication information being used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the sending first indication information to the terminal device includes: sending, through a first signaling, first indication information to the terminal device; where the first signaling includes at least one of the following: scheduling signaling of system information, master information block, system information and paging scheduling signaling.

Optionally, in a case that the first signaling includes the scheduling signaling of the system information, M bit of a reserved bit in the scheduling signaling is used to carry the first indication information, where M is an integer greater than or equal to 1.

Optionally, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Optionally, in a case that the first signaling includes the master information block, 1 bit in a reserved field in the master information block is used to carry the first indication information.

Optionally, in a case that the first signaling includes the system information, N bit in the system information is used to carry the first indication information, where N is an integer greater than or equal to 1.

Optionally, in a case that the channel access mode is No-LBT mode, a field related to a channel access type in the DCI is 0 bit.

Optionally, in a case that the first signaling includes the paging scheduling signaling, K bit of a reserved bit in the paging scheduling signaling is used to carry the first indication information, where K is an integer greater than or equal to 1.

Optionally, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the sending the first indication information to the terminal device includes: sending, through radio resource control (RRC) signaling, the first indication information to the terminal device.

Optionally, the first indication information is carried in a bandwidth part uplink dedicated field and/or a bandwidth part downlink dedicated field in an RRC signaling.

Optionally, a level targeted by the channel access mode is determined by a field carrying the RRC signaling; where the level targeted by the channel access mode includes at least one of the following:
terminal device level;
uplink bandwidth part level;
downlink bandwidth part level.

Optionally, the first unlicensed frequency band is a high-frequency unlicensed frequency band.

An embodiment of the present disclosure also provides a terminal device, includes a memory, a transceiver, and a processor, where the memory is configured to store computer program; the transceiver is configured to send and receive data under control of the processor; and the processor is configured to read the computer program in the memory and perform the following operations: receiving, through the transceiver, first indication information sent by a network device, where the first indication information is used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the processor is configured to read the computer program of the receiving, through the transceiver, the first indication information sent by the network device in the memory and perform the following operations: receiving, through the transceiver, first indication information sent by the network device through a first signaling; where the first signaling includes at least one of the following: scheduling signaling of system information, master information block, system information and paging scheduling signaling.

Optionally, in a case that the channel access mode is specific for a terminal, the processor is configured to read the computer program of the receiving, through the transceiver, the first indication information sent by the network device in the memory and perform the following operations: receiving, through the transceiver, first indication information sent by the network device through radio resource control (RRC) signaling.

An embodiment of the present disclosure also provides a network device, includes a memory, a transceiver, and a processor, where the memory is configured to store computer program; the transceiver is configured to send and receive data under control of the processor; and the processor is configured to read the computer program in the memory and perform the following operations: sending, through the transceiver, first indication information to a terminal device, where the first indication information is used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the processor is configured to read the computer program of the sending, through the transceiver, the first indication information to the terminal device in the memory and perform the following operations: sending, through the transceiver, first indication information to the terminal device through a first signaling; where the first signaling includes at least one of the following: scheduling signaling of system information, master information block, system information and paging scheduling signaling.

Optionally, in a case that the channel access mode is specific for a terminal, the processor is configured to read the computer program of the sending, through the transceiver, the first indication information to the terminal device in the memory and perform the following operations: sending, through the transceiver, the first indication information to the terminal device through radio resource control (RRC) signaling.

An embodiment of the present disclosure also provides a terminal device, includes: a receiving unit, configured to receive first indication information sent by a network device, where the first indication information is used to indicate a channel access mode of the terminal device in a first unlicensed frequency band, where the channel access mode includes: a listen before talk (LBT) mode or a no listen before talk (No-LBT) mode.

An embodiment of the present disclosure also provides a network device, including: a sending unit, configured to send first indication information to a terminal device, where the first indication information is used to indicate a channel access mode of the terminal device in a first unlicensed frequency band, where the channel access mode includes: a listen before talk (LBT) mode or a no listen before talk (No-LBT) mode.

An embodiment of the present disclosure also provides a processor readable storage medium, where the processor readable storage medium is stored with the computer program, the computer program is configured to cause the processor to implement the above-mentioned method.

The beneficial effects of the present disclosure are as follows.

In the above-mentioned solution, the channel access mode where the terminal device is located is clarified by the receiving the first indication information sent by the network device indicating the channel access mode of the terminal device in the first unlicensed frequency band, which facilitates the subsequent operations of the terminal device.

### BRIEF DESCRIPTION OF THE DRAWINGS

In order to more clearly explain the technical solutions in the embodiments of the present disclosure or in the related technology, the drawings that need to be used in the descriptions of the embodiments or related technology will be briefly described below. Obviously, the drawings in the following description are only some embodiments described in the present disclosure, and based on these drawings, those of ordinary skill in the art can obtain other drawings without creative effort.
FIG. 1 shows a structural view of a network system applicable to an embodiment of the present disclosure;
FIG. 2 shows a flowchart of a mode indication method applied to a terminal device according to an embodiment of the present disclosure;
FIG. 3 shows a flowchart of a mode indication method applied to a network device according to an embodiment of the present disclosure;
FIG. 4 shows a flowchart of communication between a terminal and a base station in scenario 1;
FIG. 5 shows a flowchart of communication between the terminal and the base station in scenario 2;
FIG. 6 shows a flowchart of communication between the terminal and the base station in scenario 3;
FIG. 7 shows a schematic view of a unit of the terminal device according to an embodiment of the present disclosure;
FIG. 8 shows a structural view of the terminal device according to an embodiment of the present disclosure;
FIG. 9 shows a schematic view of a unit of the network device according to an embodiment of the present disclosure; and
FIG. 10 shows a structural view of the network device according to an embodiment of the present disclosure.

### DETAILED DESCRIPTION

The technical solutions in the embodiments of the present disclosure will be described clearly and completely below with reference to the drawings in the embodiments of the present disclosure, apparently, the described embodiments are part of the embodiments of the present disclosure, rather than all of embodiments. Based on the embodiments in the present disclosure, all other embodiments obtained by those ordinarily skilled in the art without paying creative efforts shall fall within the protection scope of the present disclosure.

Such terms as "first" and "second" in the specification and claims of the present disclosure are used to distinguish similar objects, and are not necessarily used to describe a specific order or sequence. It should be understood that the data so used are interchangeable under appropriate circumstances such that the embodiments of the present disclosure described herein, for example, can be implemented in sequences other than those illustrated or described herein. Furthermore, the terms "comprising" and "having", as well as any variations thereof, are intended to cover a non-exclusive inclusion, for example, a process, method, system, product or device including a sequence of steps or elements is not necessarily limited to those steps or elements explicitly listed, but may include other steps or elements not explicitly listed or inherent to the process, method, product or device.

The term "and/or" in the embodiments of the present disclosure describes the association relationship of associated objects, indicating that there may be three relationships, for example, A and/or B, may mean such three cases: A exists alone, A and B exist simultaneously, and B exists alone. The character "/" generally indicates that the contextual objects are in an "or" relationship. The term "plurality" in the embodiments of the present disclosure refers to two or more, and other quantifiers are similar.

In the embodiments of the present disclosure, words such as "exemplary" or "for example" are used as examples, illustrations or explanations. Any embodiment or design described as "exemplary" or "for example" in the embodiments of the present disclosure shall not be construed as being preferred or advantageous over other embodiments or designs. Exactly, the use of words such as "exemplary" or "such as" is intended to present related concepts in a concrete manner.

Embodiments of the present disclosure are described below with reference to the drawings. The mode indication method, terminal device and network device provided by the embodiments of the present disclosure may be applied in a radio communication system. The radio communication system may be a system (hereinafter referred to as 5G system for short) adopting the fifth generation (5th Generation, 5G) mobile communication technology, those skilled in the art can understand that the 5G NR system is only for an example and not as a limitation.

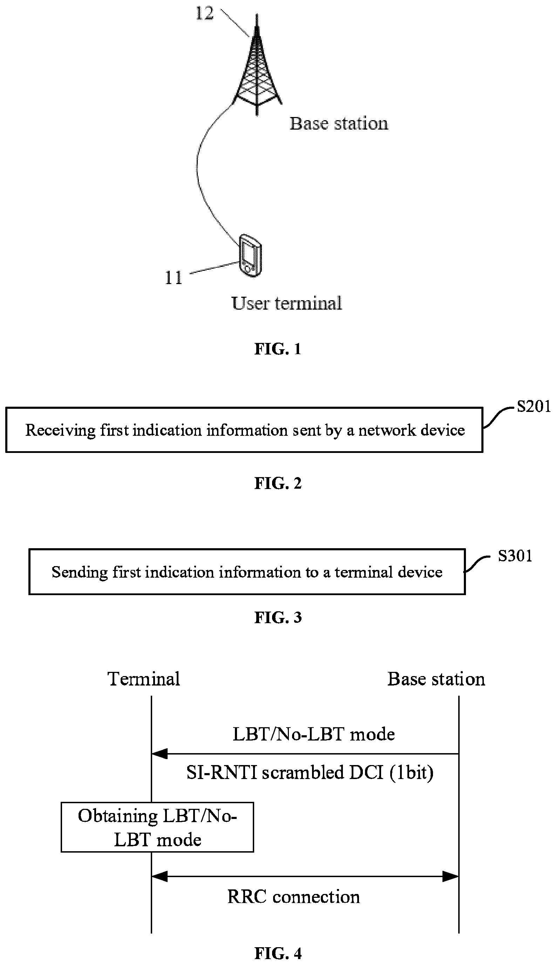

Referring to FIG. 1, FIG. 1 is a structural view of a network system applicable to an embodiment of the present disclosure. As shown in FIG. 1, it includes a user terminal 11 and a base station 12, where the user terminal 11 may be a user equipment (User Equipment, UE), for example: the user terminal 11 may be a mobile phone, a tablet computer (Tablet Personal Computer), a laptop computer (Laptop Computer), a personal digital assistant (personal digital assistant, referred to as PDA), a mobile Internet device (Mobile Internet Device, MID) or a wearable device and other terminal side devices. It should be noted that the specific type of the user terminal 11 is not limited in the embodiment of the present disclosure. The above-mentioned base station 12 may be a base station (for example, gNB, 5G NR NB) of 5G and later versions, or a base station in other communication system, or called Node B. It should be noted that, in the embodiment of the present disclosure, only the 5G base station is taken as an example, but the specific type of the base station 12 is not limited.

Before describing the embodiments of the present disclosure, some concepts mentioned below will be explained first.

The physical layer channel, signal, procedure and protocol in the frequency band higher than 52.6GHz are considered to be designed in the New Radio (NR) system. Potential applications in high frequency bands include Enhanced Mobile Broadband (Enhanced Mobile Broadband, eMBB), mobile data offload, short-distance high data rate device-to-device (Device-to-Device D2D) communication, broadband power distribution network, integrated access backhaul, factory automation, industry internet of things (Industry Internet of things, IIOT), radio display transmission, augmented reality (Augmented Reality, AR) / virtual reality (Virtual Reality, VR) wearable devices, intelligent transportation systems (Intelligent Transportation Systems, ITS), vehicle networking (Vehicle-to-Everything, V2X), data center rack connection, smart grid automation, private network and high positioning accuracy support, etc. The 3rd Generation Partnership Project (3rd Generation Partnership Project, 3GPP) has determined that two channel access modes are supported in the unlicensed frequency band allowed by local regulations for No-LBT operation, the two channel access modes are LBT mode and No-LBT mode.

In the new radio unlicensed (New Radio Unlicensed, NR-U) frequency band, control signaling of the physical layer of the NR system is designed as follows. In a case that the system works in the unlicensed frequency band, 2bit information carried by the ChannelAccess-CPext field in the downlink control information (Downlink Control Information, DCI) format 0_0 scrambled by cell radio network temporary identifier (Cell Radio Network Temporary Identifier, C-RNTI) or configured scheduling radio network temporary identifier (Configured Scheduling Radio Network Temporary Identifier, CS-RNTI) or modulcation coding scheme cell radio network temporary identifier (Modulcation Coding Scheme Cell Radio Network Temporary Identifier, MCS-C-RNTI) or temporary cell radio network temporary identifier (Temporary Cell Radio Network Temporary Identifier, TC-RNTI) and the DCI format 1_0 scrambled by C-RNTI or CS-RNTI or MCS-C-RNTI or TC-RNTI is configured to indicate the combination of a channel access type and cyclic prefix (Cyclic Prefix, CP) extension to user equipment (User Equipment, UE, also called a terminal); otherwise, this field is 0bit.

When the system works in an unlicensed frequency band and there are high-layer parameter configurations, the ChannelAccess-CPext-CAPC (specifically, CAPC indicates channel access priority) field in DCI format 0_1 and DCI format 1_1 carries 0, 1, 2, 3, 4, 5 or 6 bits (bit) information, and is configured to indicate the channel access mode of the UE; otherwise, this field is 0bit.

For DCI scrambled by system information radio network temporary identifier (SI-RNTI), in a case that the system works in an unlicensed frequency band, DCI format 1_0 scrambled by SI-RNTI has 17 bits of reserved bit; otherwise, 15 bits of reserved bit. For the DCI scrambled by the P-RNTI, the DCI format 1_0 scrambled by the P-RNTI has 8 bits of reserved bit; otherwise, 6 bits of reserved bit. For a spare field (spare field) of physical broadcast channel (Physical Broadcast Channel, PBCH), there is a 1-bit position for indicating reserved master information block (Master Information Block, MIB) information.

An embodiment of the present disclosure provides a mode indication method, a terminal device and a network device, so as to solve the problem that the terminal does not know the channel access mode where the terminal is located currently, which affects subsequent operations.

The method and the device are conceived based on the same application. Since the method and the device have similar problem-solving principles, the implementations of the device and the method may be referred to each other, and the repetition will not be repeated.

As shown in FIG. 2, an embodiment of the present disclosure provides a mode indication method, performed by a terminal device, which includes:
step S201, receiving first indication information sent by a network device;

It should be noted that the first indication information is used to indicate a channel access mode of the terminal device in a first unlicensed frequency band; specifically, the channel access mode includes: listen before talk (LBT) mode or no listen before talk (No-LBT) mode.

It should be noted that the first unlicensed frequency band is a high-frequency unlicensed frequency band, that is, an unlicensed frequency band greater than 52.6 GHz, that is, high frequency band in the unlicensed frequency band is applicable in the embodiments of the present disclosure.

It should be noted that the terminal device receives the channel access mode sent by the network device configured to indicate that the terminal device is in a high-frequency unlicensed frequency band, in a case that the terminal device is in LBT mode, the terminal device needs to decode the information in the information field related to unlicensed frequency band channel access when receiving the downlink control information (DCI), for example, the terminal device needs to decode the content in the ChannelAccess-CPext and ChannelAccess-CPext-CAPC information fields; in a case that the terminal device is in No-LBT mode, then the terminal device does not need to decode the information in the information field related to unlicensed frequency band channel access when receiving the DCI, for example, the terminal device does not need to decode the content in the ChannelAccess-CPext and ChannelAccess-CPext-CAPC information fields.

It should be further noted that the channel access mode may be specific for cell (i.e. Cell-specific), and in this case, the network device configures all terminal devices in the cell to be in LBT mode or No-LBT mode; the channel access mode may also be specific for terminal device (that is, UE-specific), and in this case, the network device configures some terminal devices in the cell to be in No-LBT mode and the other part to be in LBT mode.

Specifically, in a case that the channel access mode is Cell-specific, a specific implementation of step S201 in the embodiment of the present disclosure is as follows: receiving the first indication information sent by the network device through a first signaling, where the first signaling includes at least one of the following:

### A11. scheduling signaling of system information;

It should be noted that, in this case, the network device carries the first indication information through M bit(s) of a reserved bit (also called reserved bit) in the scheduling signaling, where M is an integer greater than or equal to 1.

For example, the scheduling signaling of the system information is the DCI scrambled by system information radio network temporary identity (SI-RNTI), that is to say, a new mode indication field is added in the reserved bit of the DCI scrambled by the SI-RNTI, for example, the mode indication field occupies 1 bit and is configured to indicate whether the terminal device is in LBT mode or No-LBT mode in the unlicensed frequency band. For example, in a case that the mode indication field is 0, it indicates the LBT mode, and in a case that the mode indication field is 1, it indicates the No-LBT mode; or, in a case that the mode indication field is 1, it indicates the LBT mode, and in a case that the mode indication field is 0, it indicates the No-LBT mode.

Optionally, in a case that the channel access mode is No-LBT mode, the field related to the channel access type in the DCI is 0 bit, that is, in a case that the channel access mode is No-LBT mode, LBT-related information is not carried in the DCI, so as to reduce the complexity of decoding the DCI by the terminal device.

### A 12. Main information block;

It should be noted that, in this case, the network device carries the first indication information through 1 bit in a reserved field in the main information block. For example, the main information block is in the physical broadcast channel (PBCH), at this time, the network device sends the first indication information through 1 bit in the spare field (Spare field) in the PBCH. In a case that the bit is 0, it indicates the LBT mode, in a case that the bit is 1, it indicates No-LBT mode; or, in a case that the bit is 1, it indicates LBT mode, and in a case that the bit is 0, it indicates No-LBT mode.

### A13. System information;

It should be noted that, in this case, the network device carries the first indication information through N bit(s) in the system information, where N is an integer greater than or equal to 1.

For example, the system information may be system information block 1 (SIB 1), and the system information may also be any other SIBs except SIB 1; that is to say, a new mode indication field (which can be regarded as the LBT mode indication field) is added in SIB 1 or other SIBs, for example, the mode indication field occupies 1 bit and is configured to indicate whether the terminal device is in LBT mode or No-LBT mode in the unlicensed frequency band. For example, in a case that the mode indication field is 0, it indicates the LBT mode, and in a case that the mode indication field is 1, it indicates the No-LBT mode; or, in a case that the mode indication field is 1, it indicates the LBT mode, and in a case that the mode indication field is 0, it indicates the No-LBT mode.

Optionally, the LBT mode indication field in the system information block is an optional configuration field. In a case that there is an LBT mode indication field in the system information block 1 (SIB 1), it indicates that the terminal is in LBT mode in the unlicensed frequency band; in a case that there is no LBT mode indication field in the system information block 1 (SIB 1), it implicitly indicates that the terminal is in No-LBT mode in the unlicensed frequency band, in other words, the terminal is not in LBT mode.

Optionally, in a case that the LBT mode indication field is added in the system information block (SIB 1) and the LBT mode indication field occupies multiple bits (for example, 2 bits), one of the states indicates that the terminal is in LBT mode in the unlicensed frequency band, and LBT is not required to be performed when a short control signaling of contention exemption is sent; one of the states indicates that the terminal is in LBT mode in the unlicensed frequency band, and LBT is required to be performed when a short control signaling of contention exemption is sent; one of the states indicates that the terminal is in No-LBT mode in the unlicensed frequency band.

Optionally, the LBT mode indication field in the system information block is an optional configuration field. In a case that there is an LBT mode indication field in the system information block (SIB 1) and the LBT mode indication field occupies multiple bits (for example, 2 bits), one of the states indicates that the terminal is in LBT mode in the unlicensed frequency band, and sends short control signaling of contention exemption without executing LBT; one of the states indicates that the terminal is in LBT mode in the unlicensed frequency band, and sends the short control signaling of contention exemption with executing LBT; in a case that there is no LBT mode indication field in the system information block 1 (SIB 1), it implicitly indicates that the terminal is in No-LBT mode in the unlicensed frequency band, in other words, the terminal is not in LBT mode;

Note that short control signaling of contention exemption at least includes SSB, discovery signal, Msg 1/Msg A, where the discovery signal at least includes a control resource set (CORESET) associated with the synchronization signal/broadcast channel (SS/PBCH) for scheduling the PDCCH of SIB 1, and for scheduling the PDSCH of SIB 1 and non-zero power CSI-RS.

Optionally, in a case that the LBT mode indication field is added in the system information block (SIB 1) and the LBT mode indication field occupies multiple bits (for example, 3 bits), one of the states indicates that the terminal is in the LBT mode in the unlicensed frequency band, and LBT is not required to be performed when SSB, discovery signal and Msg1/Msg A are sent; one of the states indicates that the terminal is in LBT mode in the unlicensed frequency band, LBT is not required to be performed when SSB and discovery signal are sent, and LBT is required to be performed when Msg1/Msg A is sent; one of the states indicates that the terminal is in LBT mode in the unlicensed frequency band, LBT is required to be performed when SSB and discovery signal are sent, and LBT is not required to be performed when Msg1/Msg A is sent; one of the states indicates that the terminal is in LBT mode in the unlicensed frequency band, and LBT is required to be performed when SSB, discovery signal and Msg1/Msg A are sent; one of the states indicates that the terminal is in No-LBT mode in the unlicensed frequency band;
Optionally, the LBT mode indication field in the system information block is an optional configuration field. In a case that there is an LBT mode indication field in the system information block (SIB 1) and the LBT mode indication field occupies multiple bits (for example, 2 bits), one of the states indicates that the terminal is in LBT mode in the unlicensed frequency band, and sends SSB, discovery signal and Msg1 /Msg A without executing LBT; one of the states indicates that the terminal is in LBT mode in the unlicensed frequency band, and sends SSB, and discovery signal without executing LBT, and sends Msg1/Msg A with executing LBT; one of the states indicates that the terminal is in LBT mode in unlicensed frequency band, and sends SSB, and discovery signal with executing LBT, and sends Msg1/Msg A without executing LBT; one of the states indicates that the terminal is in the LBT mode in the unlicensed frequency band, and sends SSB, discovery signal and Msg1/Msg A with executing LBT; in a case that there is no LBT mode indication field in the system information block 1 (SIB 1), it implicitly indicates that the terminal is in No-LBT mode in the unlicensed frequency band, in other words, the terminal is not in LBT mode.

### A14, Paging scheduling signaling;

It should be noted that, in this case, the network device carries the first indication information through K bit(s) of a reserved bit in the paging scheduling signaling, where K is an integer greater than or equal to 1.

For example, the paging scheduling signaling is the DCI scrambled by paging radio network temporary identity (P-RNTI), that is to say, a new mode indication field is added in the reserved bit of the DCI scrambled by the P-RNTI, for example, the mode indication field occupies 1 bit and is configured to indicate whether the terminal device is in LBT mode or No-LBT mode in the unlicensed frequency band. For example, in a case that the mode indication field is 0, it indicates the LBT mode, and in a case that the mode indication field is 1, it indicates the No-LBT mode; or, in a case that the mode indication field is 1, it indicates the LBT mode, and in a case that the mode indication field is 0, it indicates the No-LBT mode.

It should be noted that in the above-mentioned A11 to A14, A11 and A12 may be regarded as obtaining the first indication information from the network device before the RRC connection, and after the terminal device and the network device perform an RRC connection, the network device performs a mode change indication through A 14.

Optionally, in a case that the channel access mode is No-LBT mode, the field related to the channel access type in the DCI is 0 bit, that is, in a case that the network device indicates that the terminal device is in No-LBT mode, the DCI sent by the network device may not carry LBT-related information, so as to reduce the complexity of decoding the DCI by the terminal device.

Specifically, in a case that the channel access mode is UE-specific, a specific implementation of step S201 in the embodiment of the present disclosure is as follows: receiving the first indication information sent by the network device through radio resource control (RRC) signaling.

In this case, the network device indicates whether a specific terminal device is in LBT mode or No-LBT mode through RRC signaling, for example, the network device may carry the first indication information in the bandwidth part uplink dedicated field (BWP-UplinkDedicated field) or the bandwidth part downlink dedicated field (BWP-DownDedicated field) in the RRC signaling, the network device may also carry the first indication information in other fields of the RRC signaling.

Specifically, in a case that 1 bit is added in the BWP-UplinkDedicated field for carrying the first indication information, the LBT mode or No-LBT mode indicated by the network device is for the uplink bandwidth part, that is, the terminal device is in the LBT mode or No-LBT mode only in the uplink bandwidth part indicated by the network device; in a case that 1 bit is added in the BWP-DownDedicated field for carrying the first indication information, the LBT mode or No-LBT mode indicated by the network device is for the downlink bandwidth part, that is to say, the terminal device is in the LBT mode or No-LBT mode only in the downlink bandwidth part indicated by the network device. Specifically, in a case that the bit of the first indication information is 0, it indicates the LBT mode, in a case that the bit of the first indication information is 1, it indicates the No-LBT mode; or, in a case that the bit of the first indication information is 1, it indicates the LBT mode, and in a case that the bit of the first indication information is 0, it indicates the No-LBT mode. For example, in a case that the terminal receives the signaling configuration of the UE-specific mode indication after establishing the RRC connection, if the first indication information in the IE BWP-UplinkDedicated field or the IE BWP-DownDedicated field as received is 0, then the terminal in the corresponding BWP is in the LBT mode at this time; if the first indication information in the IE BWP-UplinkDedicated field or the IE BWP-DownDedicated field as received is 1, then the terminal in the corresponding BWP is in the No-LBT mode at this time.

Optionally, the channel access mode information is indicated implicitly through UL-AccessConfigListForDCI-Format1-1-r16 in the PUCCH-Config field and/or UL-AccessConfigListForDCI-Format0-1-r16 in the PUSCH-Config field in the BWP-UplinkDedicated. In a case that UL-AccessConfigListForDCI-Format1-1-r16 and/or UL-AccessConfigListForDCI-Format0-1-r16 are configured for the terminal, the terminal is in LBT mode; otherwise, the terminal is in No-LBT mode.

What needs to be specially explained herein is that when the network device notifies the terminal device that it is in No-LBT mode, the configuration method of ul-AccessConfigListForDCI-Format1-1 and IE ul-AccessConfigListForDCI-FormatO-1 of the RRC signaling in the unlicensed frequency band is the same as the configuration method of those in the licensed frequency band.

In a case that the first indication information indicates the LBT mode, the bit length of the ChannelAcess-CPext field in the DCI is determined by UL-AccessConfigListForDCI-Format1-1-r16 in the PUCCH-Config field and/or UL-AccessConfigListForDCI-Format0-1-r16 in the PUSCH-Config field in the BWP-UplinkDedicated; otherwise 0 bit.

Optionally, in a case that the channel access mode indication specific for the cell and the channel access mode indication specific for the terminal device are obtained, the channel access mode where the terminal device is located is determined according to the first indication information corresponding to the channel access mode indication specific for the terminal device.

It should be noted that, the channel access mode indication for the cell is the channel access indication at the cell level, and in a case that the terminal device receives the first indication information sent by the network device through the scheduling signaling of the system information, the master information block, the system information and the paging scheduling signaling, it can be determined implicitly that the channel access mode indication for the cell is obtained; the channel access mode indication for the terminal is the channel access indication at the terminal level, and in a case that the terminal device receives the first indication information sent by the network device through radio resource control (RRC) signaling, it can be determined implicitly that the channel access mode indication for the terminal device is obtained.

That is to say, in a case that a terminal device first obtains a Cell-specific channel access mode sent by the network device, and then obtains a UE-specific channel access mode sent by the network device, the terminal device uses the UE-specific channel access mode as the highest priority to determine the channel access mode where the terminal device is located. For example, the terminal device first obtains a Cell-specific channel access mode sent by the network device as No-LBT mode, in this No-LBT mode, the terminal device does not decode the information in the information field related to the unlicensed frequency band channel access in the DCI, and then the terminal device receives a UE-specific channel access mode sent by the network device as LBT mode, then the terminal device determines that it is in the LBT mode, and the terminal device needs to decode the information in the information field related to the unlicensed frequency band channel access in the DCI.

Optionally, in a case that the channel access mode is No-LBT mode, the field related to the channel access type in the DCI is 0 bit, that is, in a case that the network device indicates that the terminal device is in No-LBT mode, the DCI sent by the network device may not carry LBT-related information, so as to reduce the complexity of decoding the DCI by the terminal device.

To sum up, the embodiments of the present disclosure clarify the channel access mode where the terminal device is located by receiving the first indication information sent by the network device and indicating the channel access mode of the terminal device in the high-frequency unlicensed frequency band, which facilitates the subsequent operations of the terminal device; simultaneously, in the implementation of the embodiments of the present disclosure, the terminal device does not need to decode the information in the field related to the channel access in the DCI all the time, and in this way, thereby saving the power consumption of the terminal device.

As shown in FIG. 3, an embodiment of the present disclosure provides a mode indication method, performed by a network device, which includes: step S301, sending first indication information to a terminal device, the first indication information being used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the sending first indication information to the terminal device includes: sending, through a first signaling, first indication information to the terminal device; where the first signaling includes at least one of the following: scheduling signaling of system information, master information block, system information and paging scheduling signaling.

Further, in a case that the first signaling includes the scheduling signaling of the system information, M bit(s) of a reserved bit in the scheduling signaling is used to carry the first indication information, where M is an integer greater than or equal to 1.

Specially, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Further, in a case that the first signaling includes the master information block, 1 bit in a reserved field in the master information block is used to carry the first indication information.

Further, in a case that the first signaling includes the system information, N bit(s) in the system information is used to carry the first indication information, where N is an integer greater than or equal to 1.

Optionally, in a case that the channel access mode is No-LBT mode, a field related to a channel access type in the DCI is 0 bit.

Further, in a case that the first signaling includes the paging scheduling signaling, K bit(s) of a reserved bit in the paging scheduling signaling is used to carry the first indication information, where K is an integer greater than or equal to 1.

Specially, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the sending the first indication information to the terminal device includes: sending, through radio resource control (RRC) signaling, the first indication information to the terminal device.

Specially, the first indication information is carried in a bandwidth part uplink dedicated field and/or a bandwidth part downlink dedicated field in an RRC signaling.

Optionally, a level targeted by the channel access mode is determined by a field carrying the RRC signaling; where the level targeted by the channel access mode includes at least one of the following:
terminal device level;
uplink bandwidth part level;
downlink bandwidth part level.

For example, in a case that the bandwidth part uplink dedicated field in the RRC signaling is used to carry the first indication information, it can be determined that the channel access mode is for the terminal device level, in a case that the bandwidth part uplink dedicated field and the bandwidth part downlink dedicated field in the RRC signaling are used to carry the first indication information, it can be determined that the channel access mode is for the uplink bandwidth part level and the downlink bandwidth part level.

Optionally, the first unlicensed frequency band is a high-frequency unlicensed frequency band.

It should be noted that all the descriptions about the network device side in the above-mentioned embodiments are applicable to the embodiment of the mode indication method, and the same technical effect can also be achieved.

The technical solutions provided by the embodiments of the present disclosure can be applied to various systems, especially 5G systems. For example, the applicable system may be global system of mobile communication (global system of mobile communication, GSM) system, code division multiple access (code division multiple access, CDMA) system, wideband code division multiple access (Wideband Code Division Multiple Access, WCDMA) general packet radio service (general packet radio service, GPRS) system, long term evolution (long term evolution, LTE) system, LTE frequency division duplex (frequency division duplex, FDD) system, LTE time division duplex (time division duplex, TDD) system, long term evolution advanced (long term evolution advanced, LTE-A) system, universal mobile telecommunication system (universal mobile telecommunication system, UMTS), worldwide interoperability for microwave access (worldwide interoperability for microwave access, WiMAX) system, 5G new radio (New Radio, NR) system, etc. These various systems include terminal devices and network devices. The system may also include a core network part, such as an evolved packet system (Evolved Packet System, EPS), a 5G system (5GS), and the like.

The terminal device involved in the embodiments of the present disclosure may be a device that provides voice and/or data connectivity to users, a handheld device with a radio connection function, or other processing devices connected to a radio modem. In different systems, the name of the terminal device may be different. For example, in a 5G system, the terminal device may be called user equipment (User Equipment, UE). The radio terminal device can communicate with one or more core networks (Core Network, CN) via the radio access network (Radio Access Network, RAN), and the radio terminal device may be a mobile terminal device, such as a mobile phone (or called a "cellular" telephone) and a computer with the mobile terminal device, such as portable, pocket, hand-held, computer built-in or vehicle-mounted mobile apparatuses, which exchange language and/or data with the radio access network. For example, personal communication service (Personal Communication Service, PCS) phones, cordless phones, session initiated protocol (Session Initiated Protocol, SIP) phones, wireless local loop (Wireless Local Loop, WLL) stations, personal digital assistant (Personal Digital Assistant, PDA) and other devices. The radio terminal device may also be called a system, a subscriber unit, a subscriber station, a mobile station, a mobile, a remote station, an access point, a remote terminal, an access terminal, a user terminal, a user agent, and a user device, which are not limited in the embodiments of the present disclosure.

The network device involved in the embodiments of the present disclosure may be a base station, and the base station may include multiple cells that provide services for terminals. Depending on the specific application scenario, the base station may also be called an access point, or may be a device in an access network that communicates with a radio terminal device over an air interface through one or more sectors, or other names. The network device may be used to interchange the received over-the-air frame with Internet Protocol (Internet Protocol, IP) packet and acts as a router between a radio terminal device and the rest part of the access network, where the rest part of the access network may include the Internet Protocol (IP) communication network. The network device may also coordinate attribute management for the air interface. For example, the network device involved in this embodiment of the present disclosure may be a network device (Base Transceiver Station, BTS) in Global System for Mobile communications (Global System for Mobile communications, GSM) or Code Division Multiple Access (Code Division Multiple Access, CDMA), or a network device (NodeB) in Wide-band Code Division Multiple Access (Wide-band Code Division Multiple Access, WCDMA), or an evolutional network device (evolutional Node B, eNB or e-NodeB) in a long term evolution (long term evolution, LTE) system, 5G base station (gNB) in the 5G network architecture (next generation system), or a home evolved base station (Home evolved Node B, HeNB), a relay node (relay node) , a home base station (femto), a pico base station (pico), etc., which are not limited in this embodiment of the present disclosure. In some network structures, a network device may include a centralized unit (centralized unit, CU) node and a distributed unit (distributed unit, DU) node, and the centralized unit and the distributed unit may also be arranged geographically separately.

One or more antennas can be respectively used between a network device and a terminal device for Multi Input Multi Output (Multi Input Multi Output, MIMO) transmission, and MIMO transmission may be Single User MIMO (Single User MIMO, SU-MIMO) or Multiple User MIMO (Multiple User MIMO, MU-MIMO). According to the shape and number of root antenna combinations, MIMO transmission may be 2D-MIMO, 3D-MIMO, FD-MIMO, or massive-MIMO, or diversity transmission, precoding transmission, or beamforming transmission, etc.

The following uses the communications between the terminal and the base station as an example to illustrate specific application scenarios of the present disclosure as follows.

Scenario 1: the terminal performs cell-specific configuration through a reserved bit of scheduling signaling (SI-RNTI scrambled DCI format 1_0) of system information, and obtains the LBT/No-LBT mode indicated by the first indication information. For example, the base station uses one or more bits in the reserved bit in the scheduling signaling of the system information to indicate the LBT/No-LBT mode, and the involved process is shown in FIG. 4, specifically as follows:
the terminal receives DCI format 1_0 scrambled by SI-RNTI;
after the terminal receives and decodes the first indication information in the reserved bit in the DCI format 1_0 scrambled by SI-RNTI, if the terminal is indicated to be in No-LBT mode, the terminal does not need to decode the ChannelAccess-CPext field, when it decodes DCI format 0_0 scrambled by C-RNTI\CS-RNTI\MCS-C-RNTI\TC-RNTI or DCI format 1_0 scrambled by C-RNTI\CS-RNTI\MCS-C-RNTI\Random Access Radio Network Temporary Identifier (Random Access Radio Network Temporary Identifier, RA-RNTI)\MsgB-RNTI\TC-RNTI; if the terminal is indicated to be in No-LBT mode, the terminal does not need to decode the ChannelAccess-CPext-CAPC field, when it decodes DCI format 0_1 scrambled by C-RNTI\CS-RNTI\semi-persistent channel state information radio network temporary identifier (Semi-Persistent Channel State Information Radio Network Temporary Identifier, SP-CSI-RNTI)\MCS-C-RNTI or DCI format 1_1 scrambled by C-RNTI\CS-RNTI\MCS-C-RNTI;
it should be noted that, during this process, the terminal normally decodes and detects the DCI.

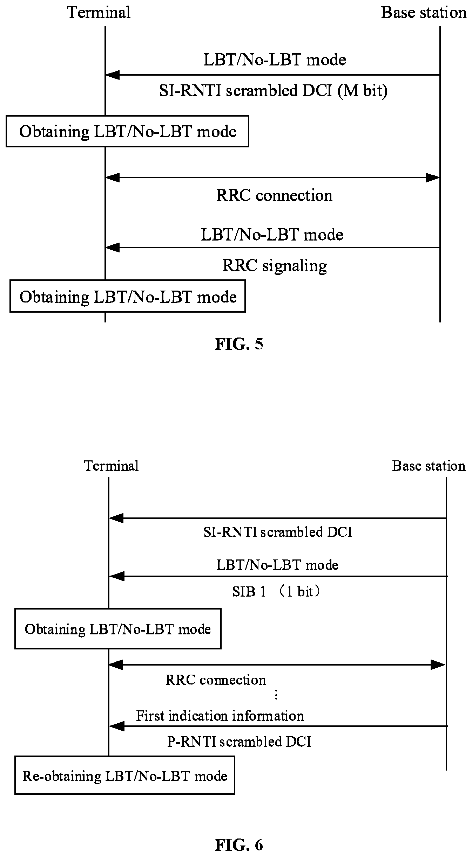

Scenario 2: the terminal performs cell-specific configuration through a reserved bit of scheduling signaling (SI-RNTI scrambled DCI format 1_0) of system information, and obtains the LBT/No-LBT mode indicated by the first indication information; after that, the base station sends UE-specific first indication information through RRC signaling to indicate the LBT/No-LBT mode for a specific terminal. The process involved is shown in FIG. 5, specifically as follows:
after receiving the first indication information configured by RRC signaling, the terminal performs operations according to the configuration mode of RRC signaling:
if the terminal is indicated to be in No-LBT mode, in a case that the terminal decodes C-RNTI\CS-RNTI\MCS-C-RNTI\TC-RNTI scrambled DCI format 0_0 or C-RNTI\CS-RNTI\MCS-C-RNTI\RA-RNTI\MsgB-RNTI\TC-RNTI scrambled DCI format 1_0, there is no need to decode the ChannelAccess-CPext field; in a case that the terminal decodes C-RNTI\CS-RNTI\SP-CSI-RNTI\MCS-C-RNTI scrambled DCI format 0_1 or C-RNTI\CS-RNTI\MCS-C-RNTI scrambled DCI format 1_1, there is no need to decode ChannelAccess-CPext-CAPC field;
it should be noted that, during this process, the terminal normally decodes and detects the DCI.

Scenario 3: after the terminal obtains the LBT/No-LBT mode indicated by the first indication information through DCI or PBCH scrambled by SI-RNTI and RRC signaling, if it needs to re-obtain new system information, the LBT/No-LBT mode is indicated by a DCI scrambled by P-RNTI. The process involved is shown in FIG. 6, specifically:
in a case that the LBT/No-LBT mode where the terminal is located changes, the terminal only needs to decode the bit occupied by the first indication information of the reserved bit in the DCI scrambled by P-RNTI to know the LBT/No-LBT mode where the terminal is located currently, the indication method thereof includes the following.

The first candidate solution: in a case that the bit occupied by the first indication information in the DCI scrambled by the P-RNTI is 0, the terminal is in LBT mode; in a case that the bit occupied by the first indication information is 1, the terminal is in No-LBT mode; and vice versa.

The second candidate solution: in a case that the bit occupied by the first indication information in the DCI scrambled by P-RNTII is 0, the LBT/No-LBT mode of the terminal remains unchanged; in a case that the bit occupied by the first indication information is 1, the LBT/No-LBT mode of the terminal is reversed, that is, LBT mode changes to No-LBT mode, and No-LBT mode changes to LBT mode.

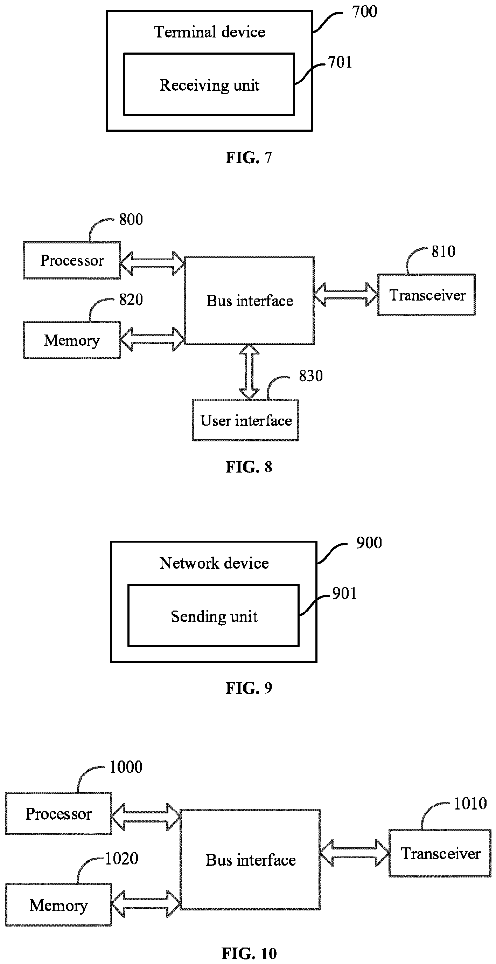

As shown in FIG. 7, an embodiment of the present disclosure provides a terminal device 700, which includes: a receiving unit 701, configured to receive first indication information sent by a network device, the first indication information being used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the receiving unit 701 is configured to receive first indication information sent by the network device through a first signaling; where the first signaling includes at least one of the following: scheduling signaling of system information, master information block, system information and paging scheduling signaling.

Further, in a case that the first signaling includes the scheduling signaling of the system information, M bit of a reserved bit in the scheduling signaling is used to carry the first indication information, where M is an integer greater than or equal to 1.

Specially, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Further, in a case that the first signaling includes the master information block, 1 bit in a reserved field in the master information block is used to carry the first indication information.

Further, in a case that the first signaling includes the system information, N bit in the system information is used to carry the first indication information, where N is an integer greater than or equal to 1.

Optionally, in a case that the channel access mode is No-LBT mode, a field related to a channel access type in the DCI is 0 bit.

Further, in a case that the first signaling includes the paging scheduling signaling, K bit of a reserved bit in the paging scheduling signaling is used to carry the first indication information, where K is an integer greater than or equal to 1.

Further, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the receiving unit 701 is configured to: receive the first indication information sent by the network device through radio resource control (RRC) signaling.

Specially, the first indication information is carried in a bandwidth part uplink dedicated field and/or a bandwidth part downlink dedicated field in an RRC signaling.

Optionally, in a case that the channel access mode is No-LBT mode, a field related to a channel access type in the DCI is 0 bit.

Optionally, the first unlicensed frequency band is a high-frequency unlicensed frequency band.

Optionally, the channel access mode is specific for an uplink bandwidth part and/or a downlink bandwidth part.

Optionally, after the receiving unit 701 receives the first indication information sent by the network device, further including:
a determining unit, configured to determine, in a case that a channel access mode indication for the cell and a channel access mode indication for the terminal device are obtained, the channel access mode where the terminal device is located according to the first indication information corresponding to the channel access mode indication for the terminal device.

It should be noted that this terminal device embodiment is a terminal device that corresponds one-to-one to the above-mentioned method embodiment, and all the implementation methods in the above-mentioned method embodiments are applicable to this terminal device embodiment, and can also achieve the same technical effect.

It should be noted that the division of the units in the embodiment of the present disclosure is schematic, and is only a logical function division, and there may be another division manner in actual implementation. In addition, each functional unit in each embodiment of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to enable a computer device (which may be a personal computer, a server, or a network device, etc.) or a processor (processor) to execute all or part of steps of the methods described in various embodiments of the present disclosure. The aforementioned storage medium includes: U disk, mobile hard disk, read-only memory (Read-Only Memory, ROM), random access memory (Random Access Memory, RAM), magnetic disk or optical disk and other medium that can store program codes.

As shown in FIG. 8, an embodiment of the present disclosure also provides a terminal device, including a processor 800, a transceiver 810, a memory 820, and a program stored in the memory 820 and operable on the processor 800, where the transceiver 810 is connected to the processor 800 and the memory 820 through a bus interface, where the processor 800 is configured to read the program in the memory and execute the following process of:
receiving, through the transceiver 810, first indication information sent by a network device, where the first indication information is used to indicate a channel access mode of the terminal device in a first unlicensed frequency band,
where the channel access mode includes: a listen before talk (LBT) mode or a no listen before talk (No-LBT) mode.

The transceiver 810 is configured to receive and send data under the control of the processor 800.

In FIG. 8, the bus architecture may include any number of interconnected buses and bridges, specifically one or more processors represented by the processor 800 and various circuits of the memory represented by the memory 820 are linked together. The bus architecture can also link together various other circuits such as peripherals, voltage regulators, and power management circuits, etc., which are well known in the art and therefore will not be further described herein. The bus interface provides the interface. Transceiver 810 may be a plurality of elements, including a transmitter and a receiver, which provide a unit for communicating with various other apparatuses over transmission media, these transmission media include wireless channels, wired channels, optical cables and other transmission media. For different user equipments, the user interface 830 may also be an interface capable of connecting externally and internally to required device, and the connected device includes but not limited to a keypad, a display, a speaker, a microphone, a joystick, and the like.

The processor 800 is responsible for managing the bus architecture and general processing, and the memory 820 can store data used by the processor 800 when performing operations.

Optionally, the processor 800 may be a CPU (Central Processing Unit), Application Specific Integrated Circuit (Application Specific Integrated Circuit, ASIC), Field-programmable Gate Array (Field-programmable Gate Array, FPGA) or Complex Programmable Logic Device (Complex Programmable Logic Device, CPLD), and the processor can also adopt a multi-core architecture.

The processor is configured to execute the method provided by the embodiments of the present disclosure according to the obtained executable instruction by calling the computer program stored in the memory. The processor and memory may also be arranged physically separately.

Optionally, in a case that the channel access mode is specific for a cell, when the processor 800 executes the program of the receiving the first indication information sent by the network device, the following steps are implemented: receiving, through the transceiver 810, first indication information sent by the network device through the first signaling; where the first signaling includes at least one of the following: scheduling signaling of system information, master information block, system information and paging scheduling signaling.

Further, in a case that the first signaling includes the scheduling signaling of the system information, M bit of a reserved bit in the scheduling signaling is used to carry the first indication information, where M is an integer greater than or equal to 1.

Specially, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Further, in a case that the first signaling includes the master information block, 1 bit in a reserved field in the master information block is used to carry the first indication information.

Further, in a case that the first signaling includes the system information, N bit in the system information is used to carry the first indication information, where N is an integer greater than or equal to 1.

Optionally, in a case that the channel access mode is No-LBT mode, a field related to a channel access type in the DCI is 0 bit.

Further, in a case that the first signaling includes the paging scheduling signaling, K bit of a reserved bit in the paging scheduling signaling is used to carry the first indication information, where K is an integer greater than or equal to 1.

Specially, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the processor executes the program of the receiving the first indication information sent by the network device, the following steps are implemented: receiving, through the transceiver 810, the first indication information sent by the network device through radio resource control (RRC) signaling.

Further, the first indication information is carried in a bandwidth part uplink dedicated field and/or a bandwidth part downlink dedicated field in an RRC signaling.

Optionally, in a case that the channel access mode is No-LBT mode, a field related to a channel access type in the DCI is 0 bit.

Optionally, the first unlicensed frequency band is a high-frequency unlicensed frequency band.

Optionally, the channel access mode is specific for an uplink bandwidth part and/or a downlink bandwidth part.

Optionally, when the processor 800 executes the program, the following steps are also implemented: determining, in a case that a channel access mode indication for the cell and a channel access mode indication for the terminal device are obtained, the channel access mode where the terminal device is located according to the first indication information corresponding to the channel access mode indication for the terminal device.

It should be noted here that the above-mentioned terminal device provided by the embodiments of the present disclosure can realize all the method steps realized by the above-mentioned method embodiments, and can achieve the same technical effect. Parts and beneficial effects in this embodiment that are the same as those in the method embodiment will not be described in detail here.

An embodiment of the present disclosure further provides a computer-readable storage medium on which a computer program is stored, where when the computer program is executed by a processor, the steps of the mode indication method applied to a terminal device are implemented. The processor-readable storage medium may be any available medium or data storage device that can be accessed by a processor, which includes but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state disk (SSD)), etc.

As shown in FIG. 9, an embodiment of the present disclosure provides a network device 900, which includes: a sending unit 900, configured to send first indication information to a terminal device, where the first indication information is used to indicate a channel access mode of the terminal device in a first unlicensed frequency band, where the channel access mode includes: a listen before talk (LBT) mode or a no listen before talk (No-LBT) mode.

Optionally, in a case that the channel access mode is specific for a cell, the sending unit 901 is configured to: send, through a first signaling, first indication information to the terminal device; where the first signaling includes at least one of the following: scheduling signaling of system information, master information block, system information and paging scheduling signaling.

Further, in a case that the first signaling includes the scheduling signaling of the system information, M bit of a reserved bit in the scheduling signaling is used to carry the first indication information, where M is an integer greater than or equal to 1.

Specially, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Further, in a case that the first signaling includes the master information block, 1 bit in a reserved field in the master information block is used to carry the first indication information.

Further, in a case that the first signaling includes the system information, N bit in the system information is used to carry the first indication information, where N is an integer greater than or equal to 1.

Optionally, in a case that the channel access mode is No-LBT mode, a field related to a channel access type in the DCI is 0 bit.

Further, in a case that the first signaling includes the paging scheduling signaling, K bit of a reserved bit in the paging scheduling signaling is used to carry the first indication information, where K is an integer greater than or equal to 1.

Specially, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the sending unit 901 is configured to: send, through radio resource control (RRC) signaling, the first indication information to the terminal device.

Further, the first indication information is carried in a bandwidth part uplink dedicated field and/or a bandwidth part downlink dedicated field in an RRC signaling.

Optionally, a level targeted by the channel access mode is determined by a field carrying the RRC signaling; where the level targeted by the channel access mode includes at least one of the following:
terminal device level;
uplink bandwidth part level;
downlink bandwidth part level.

Optionally, the first unlicensed frequency band is a high-frequency unlicensed frequency band.

It should be noted that this network device embodiment is a network device that corresponds one-to-one to the above-mentioned method embodiment, and all the implementation methods in the above-mentioned method embodiments are applicable to this network device embodiment, and can also achieve the same technical effect.

It should be noted that the division of the units in the embodiment of the present disclosure is schematic, and is only a logical function division, and there may be another division manner in actual implementation. In addition, each functional unit in each embodiment of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, the essence of the technical solution of the present disclosure or the part that contributes to the related technology or all or part of the technical solution can be embodied in the form of a software product, and the computer software product is stored in a storage medium. Several instructions are included to enable a computer device (which may be a personal computer, a server, or a network device, etc.) or a processor (processor) to execute all or part of steps of the methods described in various embodiments of the present disclosure. The aforementioned storage medium includes: U disk, mobile hard disk, read-only memory (Read-Only Memory, ROM), random access memory (Random Access Memory, RAM), magnetic disk or optical disk and other medium that can store program codes.

As shown in FIG. 10, an embodiment of the present disclosure also provides a network device, including a processor 1000, a transceiver 1010, a memory 1020, and a program stored in the memory 1020 and operable on the processor 1000; where the transceiver 1010 is connected to the processor 1000 and the memory 1020 through a bus interface, where the processor 1000 is configured to read the program in the memory and perform the following process:
sending, through the transceiver 1010, first indication information to a terminal device, where the first indication information is used to indicate a channel access mode of the terminal device in a first unlicensed frequency band,
where the channel access mode includes: a listen before talk (LBT) mode or a no listen before talk (No-LBT) mode.

The transceiver 1010 is configured to receive and send data under the control of the processor 1000.

In FIG. 10, the bus architecture may include any number of interconnected buses and bridges, specifically one or more processors represented by the processor 1000 and various circuits of the memory represented by the memory 1020 are linked together. The bus architecture can also link together various other circuits such as peripherals, voltage regulators, and power management circuits, etc., which are well known in the art and therefore will not be further described herein. The bus interface provides the interface. The transceiver 1010 may be a plurality of elements, including a transmitter and a receiver, which provides a unit for communicating with various other apparatuses over transmission media, these transmission media includes wireless channels, wired channels, optical cables, and other transmission media. The processor 1000 is responsible for managing the bus architecture and general processing, and the memory 1000 can store data used by the processor 1000 when performing operations.

The processor 1000 may be a CPU (Central Processing Unit), Application Specific Integrated Circuit (Application Specific Integrated Circuit, ASIC), Field-programmable Gate Array (Field-programmable Gate Array, FPGA) or Complex Programmable Logic Device (Complex Programmable Logic Device, CPLD), and the processor can also adopt a multi-core architecture.

Optionally, in a case that the channel access mode is specific for a cell, the processor 1000 executes the program of the sending first indication information to the terminal device, the following steps are implemented:
sending, through a first signaling, first indication information to the terminal device;
where the first signaling includes at least one of the following:
scheduling signaling of system information, master information block, system information and paging scheduling signaling.

Further, in a case that the first signaling includes the scheduling signaling of the system information, M bit of a reserved bit in the scheduling signaling is used to carry the first indication information,
where M is an integer greater than or equal to 1.

Specially, the scheduling signaling of the system information includes: downlink control information (DCI) scrambled by system information radio network temporary identifier (SI-RNTI).

Optionally, in a case that the channel access mode is No-LBT mode, a field related to a channel access type in the DCI is 0 bit.

Further, in a case that the first signaling includes the master information block, 1 bit in a reserved field in the master information block is used to carry the first indication information.

Further, in a case that the first signaling includes the system information, N bit in the system information is used to carry the first indication information, where N is an integer greater than or equal to 1.

Optionally, in a case that the channel access mode is No-LBT mode, a field related to a channel access type in the DCI is 0 bit.

Further, in a case that the first signaling includes the paging scheduling signaling, K bit of a reserved bit in the paging scheduling signaling is used to carry the first indication information, where K is an integer greater than or equal to 1.

Specially, the paging scheduling signaling includes: downlink control information (DCI) scrambled by paging radio network temporary identifier (P-RNTI).

Optionally, in a case that the channel access mode is No-LBT mode, a field related to a channel access type in the DCI is 0 bit.

Optionally, in a case that the channel access mode is specific for the terminal, the processor 1000 executes the program of the sending the first indication information to the terminal device, the following steps are implemented: sending, through radio resource control (RRC) signaling, the first indication information to the terminal device.

Further, the first indication information is carried in a bandwidth part uplink dedicated field and/or a bandwidth part downlink dedicated field in an RRC signaling.

Optionally, a level targeted by the channel access mode is determined by a field carrying the RRC signaling; where the level targeted by the channel access mode includes at least one of the following:
terminal device level;
uplink bandwidth part level;
downlink bandwidth part level.

Optionally, the first unlicensed frequency band is a high-frequency unlicensed frequency band.

It should be noted here that the above-mentioned network device provided by the embodiments of the present disclosure can realize all the method steps realized by the above-mentioned method embodiments, and can achieve the same technical effect. Parts and beneficial effects in this embodiment that are the same as those in the method embodiment will not be described in detail here.

An embodiment of the present disclosure further provides a computer-readable storage medium on which a computer program is stored, where when the computer program is executed by a processor, the steps of the mode indication method applied to a network device are implemented. The processor-readable storage medium may be any available medium or data storage device that can be accessed by a processor, which includes but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state disk (SSD)), etc.

Those skilled in the art should understand that the embodiments of the present disclosure may be provided as methods, systems, or computer program products. Therefore, the present disclosure can take the form of a full hardware embodiment, a full software embodiment, or an embodiment combining software and hardware aspects. Furthermore, the present disclosure may take the form of a computer program product embodied on one or more computer-usable storage media (including but not limited to magnetic disk storage and optical storage, etc.) having computer-usable program code embodied therein.

The present disclosure is described with reference to flowcharts and/or block diagrams of a method, an apparatus (system), and a computer program product according to the embodiments of the present disclosure. It should be understood that each process and/or block in the flowchart and/or block diagram, and combinations of processes and/or blocks in the flowchart and/or block diagram can be implemented by computer-executable instructions. These computer-executable instructions can be provided to a general purpose computer, special purpose computer, embedded processor, or processor of other programmable data processing equipment to produce a machine, such that instructions executed by the processor of the computer or other programmable data processing equipment produce an apparatus for realizing the functions specified in one or more processes of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce an article of manufacture comprising instruction means, these instruction means implements the functions specified in one or more processes of the flowchart and/or one or more blocks of the block diagram.

These processor-executable instructions can also be loaded onto a computer or other programmable data processing device, which enables a series of operational steps to be performed on the computer or other programmable device to produce a computer-implemented process, so that the instructions executed on the computer or other programmable devices provide steps for realizing the functions specified in one or more processes of the flowchart and/or one or more blocks of the block diagram.

It should be noted that it should be understood that the division of the above modules is only a division of logical functions, and may be fully or partially integrated into a physical entity or physically separated during actual implementation. And these modules can all be implemented in the form of calling software through processing elements; or these modules can all be implemented in the form of hardware; some modules can also be implemented in the form of calling software through processing elements, and some modules can be implemented in the form of hardware. For example, the determining module may be a separate processing element, or may be integrated in a chip of the above-mentioned device. In addition, the determining module may also be stored in the memory of the above-mentioned device in the form of program code, and a certain processing element of the above-mentioned device may call and execute the functions of the above-mentioned determining modules. The implementation of other modules is similar. In addition, all or part of these modules can be integrated together, and can also be implemented independently. The processing element mentioned here may be an integrated circuit with signal processing capabilities. In the implementation process, each step of the above method or each module above can be completed by an integrated logic circuit of hardware in the processor element or an instruction in the form of software.

For example, each module, unit, subunit or submodule may be one or more integrated circuits configured to implement the above method, for example: one or more specific integrated circuits (Application Specific Integrated Circuit, ASIC), or, one or more microprocessors (digital signal processor, DSP), or, one or more field programmable gate arrays (Field Programmable Gate Array, FPGA), etc. For another example, when one of the above modules is implemented in the form of a processing element scheduling program code, the processing element may be a general-purpose processor, such as a central processing unit (Central Processing Unit, CPU) or other processors that can call program codes. For another example, these modules can be integrated together and implemented in the form of a system-on-a-chip (system-on-a-chip, SOC).

Such terms as "first" and "second" in the specification and claims of the present disclosure are used to distinguish similar objects, and are not necessarily used to describe a specific order or sequence. It should be understood that the data so used are interchangeable under appropriate circumstances such that the embodiments of the present disclosure described herein, for example, can be implemented in sequences other than those illustrated or described herein. Furthermore, the terms "comprising" and "having", as well as any variations thereof, are intended to cover a non-exclusive inclusion, for example, a process, method, system, product or device including a sequence of steps or elements is not necessarily limited to those steps or elements explicitly listed, but may include other steps or elements not explicitly listed or inherent to the process, method, product or device. In addition, the use of "and/or" in the specification and claims means at least one of the connected objects, such as A and/or B and/or C, means such these seven cases: A alone, B alone, C alone, and both A and B exist, both B and C exist, both A and C exist, and A, B, and C all exist. Similarly, the use of "at least one of A and B" in the present specification and claims should be understood as "A alone, B alone, or both A and B exist".

Obviously, those skilled in the art can make various changes and modifications to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations.

## Claims

1. A mode indication method, performed by a terminal device, comprising:
receiving first indication information sent by a network device, the first indication information being used to indicate a channel access mode of the terminal device in a first unlicensed frequency band,
wherein the channel access mode comprises: a listen before talk (LBT) mode or a no listen before talk (No-LBT) mode.

2. The method according to claim 1, wherein in a case that the channel access mode is specific for a cell, the receiving first indication information sent by the network device comprises:
receiving first indication information sent by the network device through a first signaling;
wherein the first signaling comprises at least one of the following:
scheduling signaling of system information, master information block, system information and paging scheduling signaling.

3. The method according to claim 2, wherein in a case that the first signaling comprises the scheduling signaling of the system information, M bit of a reserved bit in the scheduling signaling is used to carry the first indication information,
wherein M is an integer greater than or equal to 1.

4. The method according to claim 2 or 3, wherein the scheduling signaling of the system information comprises: downlink control information (DCI) scrambled by system information radio network temporary identifier (SI-RNTI).

5. The method according to claim 4, wherein in a case that the channel access mode is the No-LBT mode, a field related to a channel access type in the DCI is 0 bit.

6. The method according to claim 2, wherein in a case that the first signaling comprises the master information block, 1 bit in a reserved field in the master information block is used to carry the first indication information.

7. The method according to claim 2, wherein in a case that the first signaling comprises the system information, N bit in the system information is used to carry the first indication information,
wherein N is an integer greater than or equal to 1.

8. The method according to claim 7, wherein in a case that the channel access mode is the No-LBT mode, a field related to a channel access type in the DCI is 0 bit.

9. The method according to claim 2, wherein in a case that the first signaling comprises the paging scheduling signaling, K bit of a reserved bit in the paging scheduling signaling is used to carry the first indication information,
wherein K is an integer greater than or equal to 1.

10. The method according to claim 2 or 9, wherein the paging scheduling signaling comprises: downlink control information (DCI) scrambled by a paging radio network temporary identifier (P-RNTI).

11. The method according to claim 10, wherein in a case that the channel access mode is the No-LBT mode, a field related to a channel access type in the DCI is 0 bit.

12. The method according to claim 1, wherein in a case that the channel access mode is specific for the terminal, the receiving the first indication information sent by the network device comprises:
receiving the first indication information sent by the network device through a radio resource control (RRC) signaling.

13. The method according to claim 12, wherein the first indication information is carried in a bandwidth part uplink dedicated field and/or a bandwidth part downlink dedicated field in the RRC signaling.

14. The method according to claim 12, wherein in a case that the channel access mode is the No-LBT mode, a field related to a channel access type in the DCI is 0 bit.

15. The method according to claim 1, wherein the first unlicensed frequency band is a high-frequency unlicensed frequency band.

16. The method according to claim 1, wherein the channel access mode is for an uplink bandwidth part and/or a downlink bandwidth part.

17. The method according to claim 1, wherein after the receiving the first indication information sent by the network device, the method further comprises:
determining, in a case that a channel access mode indication specific for the cell and a channel access mode indication specific for the terminal device are obtained, the channel access mode where the terminal device is located according to the first indication information corresponding to the channel access mode indication specific for the terminal device.

18. A mode indication method, performed by a network device, comprising:
sending first indication information to a terminal device, the first indication information being used to indicate a channel access mode of the terminal device in a first unlicensed frequency band,
wherein the channel access mode comprises: a listen before talk (LBT) mode or a no listen before talk (No-LBT) mode.

19. The method according to claim 18, wherein in a case that the channel access mode is specific for a cell, the sending first indication information to the terminal device comprises:
sending, through a first signaling, the first indication information to the terminal device;
wherein the first signaling comprises at least one of the following:
scheduling signaling of system information, master information block, system information and paging scheduling signaling.

20. The method according to claim 19, wherein in a case that the first signaling comprises the scheduling signaling of the system information, M bit of a reserved bit in the scheduling signaling is used to carry the first indication information,
wherein M is an integer greater than or equal to 1.

21. The method according to claim 19 or 20, wherein the scheduling signaling of the system information comprises: downlink control information (DCI) scrambled by a system information radio network temporary identifier (SI-RNTI).

22. The method according to claim 21, wherein in a case that the channel access mode is the No-LBT mode, a field related to a channel access type in the DCI is 0 bit.

23. The method according to claim 19, wherein in a case that the first signaling comprises the master information block, 1 bit in a reserved field in the master information block is used to carry the first indication information.

24. The method according to claim 19, wherein in a case that the first signaling comprises the system information, N bit in the system information is used to carry the first indication information,
wherein N is an integer greater than or equal to 1.

25. The method according to claim 24, wherein in a case that the channel access mode is the No-LBT mode, a field related to a channel access type in the DCI is 0 bit.

26. The method according to claim 19, wherein in a case that the first signaling comprises the paging scheduling signaling, K bit of a reserved bit in the paging scheduling signaling is used to carry the first indication information,
wherein K is an integer greater than or equal to 1.

27. The method according to claim 19 or 26, wherein the paging scheduling signaling comprises: downlink control information (DCI) scrambled by paging radio network temporary identifier (P-RNTI).

28. The method according to claim 27, wherein in a case that the channel access mode is the No-LBT mode, a field related to a channel access type in the DCI is 0 bit.

29. The method according to claim 18, wherein in a case that the channel access mode is specific for the terminal, the sending the first indication information to the terminal device comprises:
sending, through radio resource control (RRC) signaling, the first indication information to the terminal device.

30. The method according to claim 29, wherein the first indication information is carried in a bandwidth part uplink dedicated field and/or a bandwidth part downlink dedicated field in the RRC signaling.

31. The method according to claim 29, wherein a level targeted by the channel access mode is determined by a field carrying the RRC signaling;
wherein the level targeted by the channel access mode comprises at least one of the following:
terminal device level;
uplink bandwidth part level;
downlink bandwidth part level.

32. The method according to claim 18, wherein the first unlicensed frequency band is a high-frequency unlicensed frequency band.

33. A terminal device, comprising a memory, a transceiver and a processor, wherein the memory is configured to store a computer program; the transceiver is configured to send and receive data under control of the processor; and the processor is configured to read the computer program in the memory and perform the following operations:
receiving, through the transceiver, first indication information sent by a network device, wherein the first indication information is used to indicate a channel access mode of the terminal device in a first unlicensed frequency band,
wherein the channel access mode comprises: a listen before talk (LBT) mode or a no listen before talk (No-LBT) mode.

34. The terminal device according to claim 33, wherein in a case that the channel access mode is specific for a cell, the processor is configured to read the computer program of the receiving, through the transceiver, the first indication information sent by the network device in the memory and to perform the following operations:
receiving, through the transceiver, first indication information sent by the network device through a first signaling;
wherein the first signaling comprises at least one of the following:
scheduling signaling of system information, master information block, system information and paging scheduling signaling.

35. The terminal device according to claim 33, wherein in a case that the channel access mode is specific for a terminal, the processor is configured to read the computer program of the receiving, through the transceiver, the first indication information sent by the network device in the memory and to perform the following operations:
receiving, through the transceiver, first indication information sent by the network device through radio resource control (RRC) signaling.

36. A network device, comprising a memory, a transceiver, and a processor, wherein the memory is configured to store a computer program; the transceiver is configured to send and receive data under control of the processor; and the processor is configured to read the computer program in the memory and perform the following operations:
sending, through the transceiver, first indication information to a terminal device, wherein the first indication information is used to indicate a channel access mode of the terminal device in a first unlicensed frequency band,
wherein the channel access mode comprises: a listen before talk (LBT) mode or a no listen before talk (No-LBT) mode.

37. The network device according to claim 36, wherein in a case that the channel access mode is specific for a cell, the processor is configured to read the computer program of the sending, through the transceiver, the first indication information to the terminal device in the memory and to perform the following operations:
sending, through the transceiver, first indication information to the terminal device through a first signaling;
wherein the first signaling comprises at least one of the following:
scheduling signaling of system information, master information block, system information and paging scheduling signaling.

38. The network device according to claim 36, wherein in a case that the channel access mode is specific for a terminal, the processor is configured to read the computer program of the sending, through the transceiver, the first indication information to the terminal device in the memory and to perform the following operations:
sending, through the transceiver, the first indication information to the terminal device through radio resource control (RRC) signaling.

39. A terminal device, comprising:
a receiving unit, configured to receive first indication information sent by a network device, the first indication information being used to indicate a channel access mode of the terminal device in a first unlicensed frequency band,
wherein the channel access mode comprises: a listen before talk (LBT) mode or a no listen before talk (No-LBT) mode.

40. A network device, comprising:
a sending unit, configured to send first indication information to a terminal device, the first indication information being used to indicate a channel access mode of the terminal device in a first unlicensed frequency band,
wherein the channel access mode comprises: a listen before talk (LBT) mode or a no listen before talk (No-LBT) mode.

41. A processor-readable storage medium, wherein the processor-readable storage medium stores a computer program, and the computer program is configured to cause the processor to implement the method according to any one of claims 1 to 32.
